# EUROPEAN PATENT APPLICATION

(11) **EP 4 503 553 A1**
(43) Date of publication of application: **05.02.2025**
(21) Application number: 23784075.6
(22) Date of filing: 28.01.2023
(51) Int. Cl.: H04L 45/00

(54) **MESSAGE FORWARDING METHOD, APPARATUS, STORAGE MEDIUM AND ELECTRONIC APPARATUS**

(30) Priority: 06.04.2022 CN 202210357046
(71) Applicant: ZTE Corporation, Shenzhen, Guangdong 518057 (CN)
(72) Inventor: CHEN, Ran, Shenzhen, Guangdong 518057 (CN); WEN, Jianzhong, Shenzhen, Guangdong 518057 (CN); LIU, Aihua, Shenzhen, Guangdong 518057 (CN)
(74) Representative: Carangelo, Pierluigi
(86) International application number: PCT/CN2023/073577
(87) International publication number: WO 2023/193511

(57) **Abstract**

Provided are a packet forwarding method and apparatus, a storage medium, and an electronic device, the method comprises: an SRv6 packet is received by a domain boundary node between an SRv6 network and a non-IP network, the SRv6 packet is forwarded according to a behavior indication of an SRv6 SID of the SRv6 packet. The problem in the related art that how the SRv6 packet traverses a non-IP network through the domain boundary node between the SRv6 network and the non-IP network can be solved, and packet forwarding across the non-IP network is realized.

## Description

### Cross-Reference to Related Application

This application is based on Chinese patent application CN 202210357046.3 filed on 06 April 2022 and entitled "PACKET FORWARDING METHOD AND APPARATUS, STORAGE MEDIUM, AND ELECTRONIC DEVICE", and claims priority to Chinese patent application, the application of which is incorporated herein by reference in its entirety.

### Technical Field

Embodiments of the present application relate to the field of communications, and in particular, to a packet forwarding method and apparatus, a storage medium, and an electronic devices.

### Background

In network communications, Segment Routing (SR) is a source routing technology. When the technology is used, a forwarding point does not need to perceive a service state, and only needs to maintain topology point information to decouple service instance numbers from a network, thereby greatly improving a capability and extensibility of supporting a ubiquitous connection in the network. The principle of the SR is that the source node pushes an instruction carrying routing information to a packet header, and the intermediate forwarding point pops out related instructions hop by hop for packet forwarding.

The SR technology considers two types of encapsulation in a data plane, one is Multi-Protocol Label Switching (MPLS) encapsulation, mainly using an MPLS data plane, the other is SRv6, using an Internet Brief of the case Version 6 (IPv6 for short) encapsulation, and the SR architecture can run on the two data planes. The MPLS forwarding plane can be applied to the SR model without any modification, and the SRv6 technology adds an SRH (Segment Routing Header) header to the IPv6 message to store an SRv6 SID (segment ID) list in a 128-bit IPv6 address format. The 128-bit SRv6 SID is mainly composed of three parts: an LOC field (IPv6 prefix format, routable) for identifying a node location, a FUNC field (local identification) for identifying a service and function, and an ARG field for storing related parameters. A standard SRv6 SID may define path information and service and function information of a specific node.

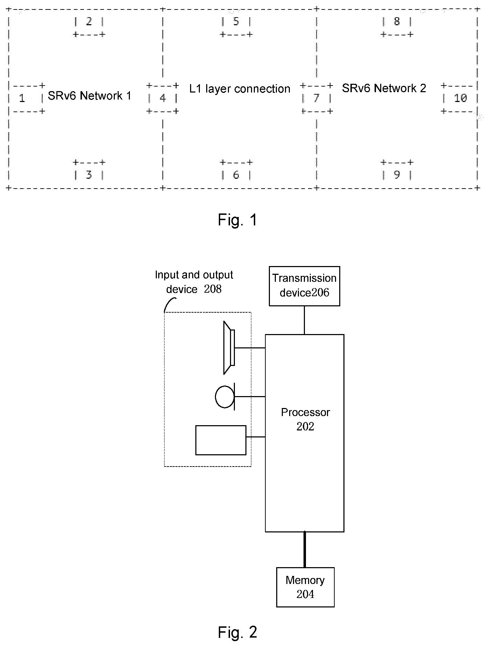

Currently, a network already supports a Slicing Packet Network (SPN network). The SPN network may be a network that supports SR-MPLS, and may also be an L1 layer network, such as an MTN/OTN network. If the SRv6 is deployed in an existing network, the SRv6 needs to coexist and interwork with the SPN network. Figure 1 is a schematic diagram of interworking between an L1 layer network and an SRv6 in the related art. As shown in figure 1, figure 1 is an exemplary diagram of a scenario of interworking between the L1 layer network and the SRv6, and figure 1 is only an exemplary diagram of one L1 network (MTN/OTN/small particle), and an intermediate network may also be an L2 network or another non-IP network, such as an optical link of an L0, and a Wavelength Division Multiplexing (WDM)/passive optical network (PON); a wireless link (5G/wifi), a space link, etc. 1, 2, 3 and 4 belong to SRv6 network 1; 4, 5, 6 and 7 belong to an L1 layer network; 7, 8, 9 and 10 belong to SRv6 network 2; the nodes 4 and 7 belong to the SRv6 layer network and the L1 layer network at the same time, but for the nodes in the SRv6 layer network and the L1 layer network, when the data packet is forwarded from the boundary node in the SRv6 layer network and the L1 layer network to the node in the L1 layer domain, there is no protocol and solution at present for solving how to traverse the L1 network after the data packet comes out from the 4/7 node.

Aiming at the problem in the related art of how the SRv6 packet traverses the non-IP network through the domain boundary node between the SRv6 network and the non-IP network, no solution has been proposed.

### Summary

Embodiments of the present application provide a packet forwarding method and apparatus, a storage medium, and an electronic devices, so as to at least solve a problem in the related art that how the SRv6 packet traverses a non-IP network through the domain boundary node between the SRv6 network and the non-IP network.

According to one embodiment of the present application, a packet forwarding method is provided, which is performed by a boundary node between an SRv6 network and a non-IP network domain boundary node. The method comprises:
an SRv6 packet is received;
the SRv6 packet is forwarded according to a behavior indication of an SRv6 SID of the SRv6 packet.

According to another embodiment of the present application, also provided is a packet forwarding method, which is performed by a head node. The method comprises:
an SRv6 packet is generated including an SRv6 SID;
the SRv6 packet is sent, wherein the SRv6 SID is used for indicating the mapping between the SRv6 SID and the non-IP channel.

According to another embodiment of the present application, also provided is a packet forwarding apparatus, which is performed by a domain boundary node between an SRv6 network and a non-IP network. The device comprises:
a receiving module, configured to receive an SRv6 packet;
a forwarding module, configured to forward the SRv6 packet according to a behavior indication of an SRv6 SID of the SRv6 packet.

According to another embodiment of the present application, also provided is a packet forwarding apparatus, which is performed by a head node. The apparatus comprises:
a generation module, configured to generate an SRv6 packet including an SRv6 SID;
a sending module, configured to send the SRv6 packet, wherein the SRv6 SID is used for indicating a mapping between the SRv6 SID and the non-IP channel.

According to another embodiment of the present application, a computer readable storage medium is further provided. The storage medium stores a computer program, wherein the computer program is configured to cause, when executed by a processor, the processor to perform the steps in any one of the method embodiments.

According to another embodiment of the present application, also provided is an electronic device, comprising a memory and a processor, wherein the memory stores a computer program, and the processor is configured to execute the computer program to perform the steps in any one of the method embodiments.

### Brief Description of the Drawings

Figure 1 is a schematic diagram of interworking between an L1 layer network and an SRv6 in the related art;
Figure 2 is a hardware structure block diagram of a mobile terminal in a packet forwarding method according to an embodiment of the present application;
Figure 3 is a first flowchart of a packet forwarding method according to an embodiment of the present application;
Figure 4 is a second flowchart of a packet forwarding method according to an embodiment of the present application;
Figure 5 is a flowchart of a packet forwarding method according to an embodiment of the present application;
Figure 6 is a schematic diagram of an SID according to an embodiment the present application;
Figure 7 is a schematic diagram of a channel type and a channel identifier according to an embodiment of the present application;
Figure 8 is a first block diagram of a packet forwarding apparatus according to an embodiment of the present application;
Figure 9 is a second block diagram of a packet forwarding apparatus according to an embodiment of the present application.

### Detailed Description of the Embodiments

Embodiments of the present application will be described below in detail with reference to the accompanying drawings and in conjunction with embodiments.

It should be noted that terms such as "first" and "second" in the specification, claims, and accompanying drawings of the present application are used to distinguish similar objects rather than to describe a specific sequence or a precedence order.

The method embodiments provided in the embodiments of the present application can be executed in a mobile terminal, a computer terminal or a similar computing device. Taking the mobile terminal running as an embodiment, figure 2 is a hardware structure block diagram of the mobile terminal in the packet forwarding method according to an embodiment of the present application, as shown in figure 2, the mobile terminal may include one or more processors 102 (only one is shown in figure 2) (the processors 102 may include, but are not limited to, a processing apparatus such as a microprocessor MCU or a programmable logic device FPGA), and a memory 104 configured to store data, the mobile terminal can further include a transmission device 106 and an input/output device 108 for a communication function. A person of ordinary skill in the art may understand that the structure shown in figure 2 is merely exemplary, which does not limit the structure of the foregoing mobile terminal. For example, the mobile terminal may further include more or less components than shown in figure 2, or have a different configuration from that shown in figure 2.

The memory 104 may be configured to store a computer program, for example, a software program and a module of application software, such as a computer program corresponding to the packet forwarding method in the embodiments of the present application. The processor 102 operates the computer program stored in the memory 104, so as to execute various function applications and service chain address pool slicing processing, that is, to implement the foregoing method. The memory 104 may include high-speed random access memory, and may also include non-volatile memory, such as one or more magnetic storage apparatuses, flash memory, or other non-volatile solid-state memory. In some instances, the memory 104 may further include memory remotely located with respect to the processor 102, which may be connected to mobile terminals over a network. Embodiments of such networks include, but are not limited to, the Internet, intranets, local area networks, mobile communication networks, and combinations thereof.

The transmission device 106 is configured to receive or transmit data via a network. Specific embodiments of the described network may include a wireless network provided by a communication provider of the mobile terminal. In one embodiment, the transmission device 106 may comprise a Network Interface Controller (NIC) that may be coupled to other network devices via a base station to communicate with the Internet. In one embodiment, the transmission device 106 can be a Radio Frequency (RF) module for communicating wirelessly with the Internet.

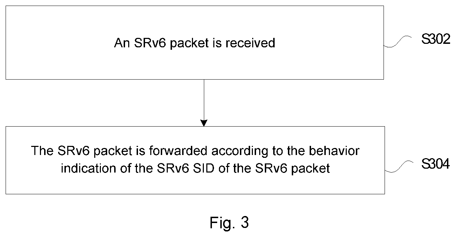

The present embodiment provides a packet forwarding method running on the described mobile terminal or network architecture. Figure 3 is a first flowchart of a packet forwarding method according to an embodiment of the present application, and as shown in figure 3, the method is performed by a domain boundary node between an SRv6 network and a non-IP network. The flow comprises the following steps:
Step S302, an SRv6 packet is received;
Step S304, the SRv6 packet is forwarded according to the behavior indication of the SRv6 SID of the SRv6 packet;
Here, the behavior indication of the SRv6 SID is only used to tell the node that a non-IP channel needs to be mapped for further forwarding. The non-IP channel mapped to the specific non-IP channel is shown in step S306.

In the present embodiment, the foregoing SRv6 SID defines new behavior indication information, where the new behavior indication information indicates a mapping between the SRv6 SID and the non-IP channel. In present embodiment, the non-IP channel includes at least one of the following: an optical link WDM/PON of the L0, a radio link, a space link, a tunnel of the L1, and an L2 link.

By means of steps S302 to S304, the problem in the related art that how an SRv6 packet traverses a non-IP network through a domain boundary node between the SRv6 network and the non-IP network can be solved, and packet forwarding across the non-IP network is realized.

In an embodiment, the step S304 may specifically include: a non-IP channel is determined according to the behavior indication of the SRv6 SID of the SRv6 packet; the SRv6 packet is mapped to the non-IP channel for forwarding.

If a behavior indication is defined for more than two non-IP networks, the non-IP channel is determined according to the behavior indication of the SRv6 SID of the SRv6 packet may specifically include: a channel type and a channel identifier are extracted from the SRv6 SID; the non-IP channel is determined according to the channel type and the channel identifier.

In another embodiment, if the behavior indication is defined for a specific type of non-IP network, for example, a behavior indication is defined for a Metro Transport Network (MTN), a behavior indication is defined for an OTN, and a behavior indication is defined for an optical link, the SRv6 SID does not need to be extended to carry the channel type. The non-IP channel is determined according to the behavior indication of the SRv6 SID of the SRv6 packet may specifically include: a channel identifier is extracted from the SRv6 SID; the non-IP channel is determined according to the channel identifier.

In another embodiment, if the mapping relation between the SRv6 SID and the non-IP channel is stored locally, the SID does not need to be extended to carry the channel type and the channel identifier, the mapping relationship is stored locally before the step S304. Specifically, the mapping relationship between the SRv6 SID and the non-IP channel sent by the controller is received, the mapping relationship between the SRv6 SID and the non-IP channel is stored locally, and correspondingly, the non-IP channel is determined according to the behavior indication of the SRv6 SID of the SRv6 packet may specifically include: the non-IP channel is determined according to the mapping relationship between the locally stored SRv6 SID and the non-IP channel.

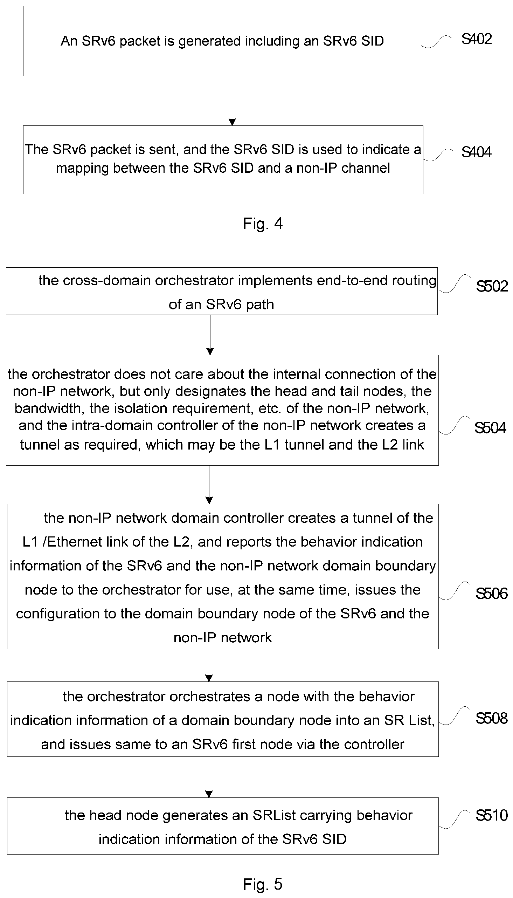

According to another aspect of the embodiments of the present application, a packet forwarding method is also provided. Figure 4 is a second flowchart of the packet forwarding method according to the embodiments of the present application, as shown in figure 4, the method is applied to a head node, and the flow comprises the following steps:
Step S402: an SRv6 packet is generated including an SRv6 SID;
Step S404: the SRv6 packet is sent, and the SRv6 SID is used to indicate a mapping between the SRv6 SID and a non-IP channel.

In the step S404, the SRv6 packet may specifically be sent to the domain boundary node between the SRv6 network and the non-IP network, wherein the SRv6 SID is used for instructing the domain boundary node to determine the non-IP channel, and to map the SRv6 packet to the non-IP channel for forwarding. The head node may send the SRv6 packet to the domain boundary node directly, or may forward the SRv6 packet to the domain boundary node through another node.

By means of steps S402 to S404, the problem in the related art that how an SRv6 packet traverses a non-IP network through a domain boundary node between an SRv6 network and the non-IP network can be solved, and packet forwarding across the non-IP network is realized.

In the present embodiment, the step S402 may specifically comprise: acquiring SID list information carrying new SID behavior indication information sent by a controller, and specifically acquiring a message sent by the controller through an extended protocol, wherein the message carries the new SID behavior indication information, the extended protocol is a protocol based on a routing protocol, and the extended protocol is a PCEP protocol and/or a BGP protocol; generating a SID list containing the new SID behavior indication information; generating the SRv6 packet including the SRv6 SID according to the SID list, wherein the SRv6 SID defines the new SID behavior indication information. The new SID behavior indication information is used to indicate the mapping between the SRv6 SID and the non-IP channel.

In the present embodiment, at least one SID in the SID list is the SID of the new SID behavior indication information.

In present embodiment, the SRv6 is bound to a non-IP link, which may be an optical link WDM/PON of the L0; a wireless link (5G/Wifi), a space link, an L1 tunnel and an L2 link.

With regard to the problem of how to encapsulate and forward a data packet by a non-IP network border node in a cross-domain scenario, as shown in figure 1, figure 1 is a cross-domain networking diagram. An embodiment of the present application provides a packet forwarding method. Figure 5 is a flowchart of a packet forwarding method according to an embodiment of the present application. As shown in figure 5, the flow comprises the following steps:
Step S502, the cross-domain orchestrator implements end-to-end routing of an SRv6 path.

Step S504, the orchestrator does not care about the internal connection of the non-IP network, but only designates the head and tail nodes, the bandwidth, the isolation requirement, etc. of the non-IP network, and the intra-domain controller of the non-IP network creates a tunnel as required, which may be the L1 tunnel and the L2 link.

Step S506: the non-IP network domain controller creates a tunnel of the L1 /Ethernet link of the L2, and reports the behavior indication information of the SRv6 and the non-IP network domain boundary node to the orchestrator for use, at the same time, issues the configuration to the domain boundary node between the SRv6 network and the non-IP network, and the controller can use the Path Computation Element Communication Protocol(PCEP), the PCEP and the Border Gateway Protocol (BGP) deliver the behavior indication information to the node.

Here is an embodiment of the controller actively allocating the behavior indication information of the domain boundary node between the SRv6 network and the non-IP network, and in a possible scenario, the behavior indication information may be allocated by the domain boundary node itself, and the allocated behavior indication information is reported to the controller, and then the controller reports the behavior indication information to the orchestrator. The node may report to the controller through the PCEP and BGP-LS protocols.
Step S508, the orchestrator orchestrates a node with the behavior indication information of a domain boundary node into an SR List, and issues same to an SRv6 head node via the controller;
Step S510: the head node generates an SRList carrying behavior indication information of the SRv6 SID.

The controller may issue the information to the SRv6 head node through interfaces such as PCEP, BGP, and NETCONF.

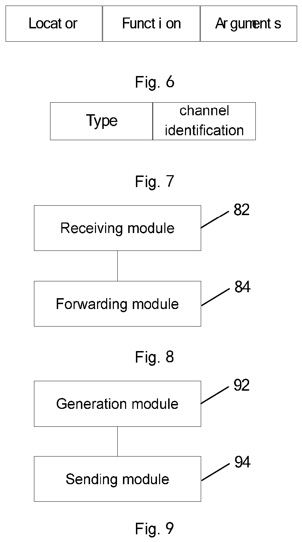

Figure 6 is a schematic diagram of an SID according to an embodiment of the present application. As shown in figure 6, SRv6 Segment Identifier (SID): used for identifying the SRv6 Segment ID. An SRv6 SID is a 128-bit IPv6 address. In SRv6 network programming, it is usually composed of three parts, the format of which is shown in figure 6.

The meaning of each field is as follows:
The locator is an identifier assigned to a network node in the network topology, and is used to forward a data packet to the node. The route corresponding to the locator may be published to the network through the IGP, so as to help other devices forward the data packet to the node that publishes the locator. In the SRv6 SID, the Locator is variable in length for adapting to networks of different scales.

The Function is used for expressing a forwarding action to be executed by the instruction, and is equivalent to an operation code of a computer instruction. In SRv6 network programming, different forwarding behaviors are described by the Function part, for example, forwarding a data packet to a specified link, or querying a table in a specified table for forwarding, and so on.

Arguments (Args) is an optional field. It is the parameters that the instructions correspond to when they are executed, and these parameters may contain the stream, service, or any other relevant information.

In the present embodiment, a new behavior indication information of a node is defined, which indicates binding/mapping between an SRv6 path and a non-IP pipe.

Defining a behavior type of a new SID: a variant End.BNI (Binding non-ip) of an End. B6 function, where End. BNI represents binding/mapping of an SRv6 path to a non-IP pipe, including an optical link WDM/PON of an L0; a wireless link (5G/Wifi), a space link, an L1 tunnel and an L2 link, etc.. A specific channel type (MTN/FGU/ODUk/OSU/Ethernet, etc.) of a channel and a channel identifier are defined in an SRv6 SID, and may be specifically carried in an Argu or a function. Figure 7 is a schematic diagram of a channel type and a channel identifier according to an embodiment of the present application. As shown in figure 7, a Type suggestion of 8 bits may indicate an MTN, an FGU, an ODUk, an OSU, an Ethernet, etc.; channel ID: 24 bit is recommended.

When the N receives a packet directed to the S (the S is a local End. BNI SID), the N executes the following instruction:
1. IF NH = SRH and SL > 0;
2. The SL router minus 1 and updates the IPv6 destination address to the SRH[SL];
3. The corresponding L1 tube/L2 link is found according to the TYPE+ Channel ID in the End. BNI SID;
4. According to the service mapping rule corresponding to the L1 pipe/L2 link, the SRv6 packet is mapped to the L1 pipe/L2 link for forwarding;
5. ELSE;
6. An ICMP parameter problem message is sent;
7. The packet is discard.

The foregoing is that the SID is extended to carry the channel type and the channel identifier. For another possible implementation, the mapping relationship between the End. BNI SID and the channel is stored locally, and the SID does not need to be extended to carry the channel type and the channel identifier.

In the foregoing embodiments, a behavior indication is defined for at least two non-IP networks, and a plurality of behavior indications may also be defined for specific types of non-IP networks. For example, a behavior indication is defined for an MTN, a behavior indication is defined for an OTN, and a behavior indication is defined for an optical link. In this case, an SRv6 SID does not need to be extended to carry a channel type. It only needs to carry the channel ID, or if the local device has the mapping relationship between the End. BNI SID and the channel, it does not need to carry the channel ID either.

Another possible implementation defines a brand new SR node behavior: specially used in a non-IP network scenario, temporarily named End. CNI (cross non-ip), indicating forwarding to a non-IP link associated with End. CNI. Likewise, one behavior indication may be defined for at least two non-IP networks, and a plurality of behavior indications may also be defined for a specific type of non-IP networks. For example, one behavior indication is defined for an MTN, one behavior indication is defined for an Optical Transport Network (OTN), one behavior indication is defined for an optical link, and the like. The End. CNI SID may carry a specific channel type of the channel (MTN/FGU/ODUk/OSU/Ethernet, etc.) + a channel identifier, or may not carry the channel identifier, so as to see the specific implementation.

Another aspect of the embodiments of the present application further provides a packet forwarding apparatus. Figure 8 is a first block diagram of the packet forwarding apparatus according to the embodiments of the present application. As shown in figure 8, the packet forwarding apparatus is performed by a domain boundary node between an SRv6 network and a non-IP network. The apparatus comprises:
A receiving module 82, configured to receive an SRv6 packet;
A forwarding module 84, configured to forward the SRv6 packet according to the behavior indication of the SRv6 SID of the SRv6 packet.

In the present embodiment, the SRv6 SID defines new behavior indication information, where the new behavior indication information indicates a mapping between the SRv6 SID and the non-IP channel.

In the present embodiment, the non-IP channel includes at least one of the following: an optical link WDM/PON of the L0, a wireless link, a space link, a tunnel of the L1, and an L2 link.

In the present embodiment, the forwarding module 84 includes:
A determining sub-module, configured to determine a non-IP channel according to the behavior indication of the SRv6 SID of the SRv6 packet;
A forwarding sub-module, configured to map the SRv6 packet to the non-IP channel for forwarding.

In an embodiment, the determining sub-module is further configured to extract a channel type and a channel identifier from the SRv6 SID; determine the non-IP channel according to the channel type and the channel identifier.

In another embodiment, the determining sub-module is further configured to extract a channel identifier from the SRv6 SID; determine the non-IP channel according to the channel identifier.

In another embodiment, the determining sub-module is further configured to determine the non-IP channel according to a mapping relationship between the SRv6 SID locally stored and the non-IP channel.

In an optional embodiment, the apparatus further includes:
A receiving module, configured to receive the mapping relation, which is sent by the controller, between the SRv6 SID and the non-IP channel;
A storage module, configured to store the mapping relation between the SRv6 SID and the non-IP channel locally.

According to another aspect of the embodiments of the present application, there is further provided a packet forwarding apparatus. Figure 9 is a second block diagram of the packet forwarding apparatus according to the embodiments of the present application, and as shown in figure 9, the packet forwarding devices is applied to a head node. The devices comprises:
A generation module 92, configured to generate an SRv6 packet including an SRv6 SID;
The sending module 94 is configured to send the SRv6 packet, wherein the SRv6 SID is used for indicating the mapping between the SRv6 SID and the non-IP channel.

In an embodiment, the generating module 92 includes:
An acquisition sub-module, configured to acquire SID list information carrying new SID behavior indication information sent by the controller;
A generating sub-module, configured to generate a SID list containing the new SID behavior indication information; generatie the SRv6 packet including the SRv6 SID according to the SID list, wherein the SRv6 SID defines the new SID behavior indication information.

In the present embodiment, the new SID behavior indication information is used for indicating the mapping between the SRv6 SID and the non-IP channel.

In an embodiment, the acquisition sub-module is further configured to acquire a message sent by the controller through an extension protocol, wherein the message carries the new SID behavior indication information, and the extension protocol is a protocol based on a routing protocol.

In the present embodiment, the extended protocol is the PCEP protocol and/or the BGP protocol.

In the present embodiment, at least one SID in the SID list is the SID of the new SID behavior indication information.

Embodiments of the present application also provide a computer readable storage medium. The computer readable storage medium stores a computer program, wherein the computer program is configured to cause, when executed by a processor, the processor to perform the steps in any one of the described method embodiments.

In an exemplary embodiment, the computer readable storage medium may include, but is not limited to, any medium that can store a computer program, such as a USB flash drive, a Read-Only Memory (ROM), a Random Access Memory (RAM), a removable hard disk, a magnetic disk, or an optical disc.

Embodiments of the present application further provide an electronic apparatus, comprising a memory and a processor wherein the memory stores a computer program. The processor is configured to execute the computer program to perform steps in any one of the method embodiments.

In an exemplary embodiment, the electronic apparatus can further comprise a transmission device and an input/output device, wherein the transmission device is connected to the processor, and the input/output device is connected to the processor.

For specific embodiments in the present application, reference may be made to the embodiments described in the foregoing embodiments and exemplary embodiments, and details are not repeatedly described in present embodiment.

Obviously, those skilled in the art should understand that each module or each step of the present application can be implemented by a universal computing device. They may be centralized on a single computing device or distributed on a network composed of a plurality of computing devices, they can be implemented by program codes executable by a computing apparatus, and thus can be stored in a storage apparatus and executed by the computing apparatus. Furthermore, in some cases, the shown or described steps may be executed in an order different from that described here, or they are made into integrated circuit modules respectively, or a plurality of modules or steps therein are made into a single integrated circuit module for implementation. As such, the present application is not limited to any particular hardware and software combination.

The foregoing descriptions are merely exemplary embodiments of the present application, but are not intended to limit the present application. For those skilled in the art, the present application may have various modifications and variations. Any modifications, equivalent replacements, improvements and the like made within the principle of the present application shall belong to the scope of protection of the present application.

## Claims

1. A method for forwarding a packet, which is performed by a domain boundary node between an SRv6 network and a non-IP network, the method comprising:
receiving an SRv6 packet;
forwarding the SRv6 packet according to a behavior indication of an SRv6 SID of the SRv6 packet.

2. The method according to claim 1, wherein,
the SRv6 SID defines new behavior indication information, where the new behavior indication information indicates a mapping between the SRv6 SID and a non-IP channel.

3. The method according to claim 2, wherein the forwarding the SRv6 packet according to a behavior indication of an SRv6 SID of the SRv6 packet comprises:
determining a non-IP channel according to the behavior indication of the SRv6 SID of the SRv6 packet;
mapping the SRv6 packet to the non-IP channel for forwarding.

4. The method according to claim 3, wherein the determining a non-IP channel according to the behavior indication of the SRv6 SID of the SRv6 packet comprises:
extracting a channel type and a channel identifier from the SRv6 SID;
determining the non-IP channel according to the channel type and the channel identifier.

5. The method according to claim 3, wherein determining a non-IP channel according to the behavior indication of the SRv6 SID of the SRv6 packet comprises:
extracting a channel identifier from the SRv6 SID;
determining the non-IP channel according to the channel identifier.

6. The method according to claim 3, wherein determining a non-IP channel according to the behavior indication of the SRv6 SID of the SRv6 packet comprises:
determining the non-IP channel according to a mapping relationship between the SRv6 SID locally stored and the non-IP channel.

7. The method according to claim 6, wherein the method further comprises:
receiving the mapping relation, which is sent by the controller, between the SRv6 SID and the non-IP channel;
storing the mapping relation between the SRv6 SID and the non-IP channel locally.

8. The method according to any one of claims 2 to 7, wherein the non-IP channel comprises at least one of the following: an optical link WDM/PON of an L0, a wireless link, a space link, an L1 tunnel, and an L2 link.

9. A method for forwarding a packet, which is performed by a head node, the method comprising:
generating an SRv6 packet including an SRv6 SID;
sending the SRv6 packet, wherein the SRv6 SID is used for indicating a mapping between the SRv6 SID and a non-IP channel.

10. The method according to claim 9, wherein the generating an SRv6 message including an SRv6 SID comprises:
acquiring SID list information carrying new SID behavior indication information sent by a controller;
generating a SID list containing the new SID behavior indication information;
generating the SRv6 packet including the SRv6 SID according to the SID list, wherein the SRv6 SID defines the new SID behavior indication information.

11. The method according to claim 10, wherein the new SID behavior indication information is used for indicating the mapping between the SRv6 SID and the non-IP channel.

12. The method according to claim 10, wherein the acquiring SID list information carrying new SID behavior indication information sent by a controller comprises:
acquiring a message sent by the controller through an extension protocol, wherein the message carries the new SID behavior indication information, and the extension protocol is a protocol based on a routing protocol.

13. The method according to claim 12, wherein,
the extended protocol being a PCEP protocol, and/or a BGP protocol.

14. The method according to claim 9, wherein at least one SID in the SID list is the SID of the new SID behavior indication information.

15. An apparatus for forwarding a packet, which is located at a domain boundary node between an SRv6 network and a non-IP network, the apparatus comprising:
a receiving module, configured to receive an SRv6 packet;
a forwarding module, configured to forward the SRv6 packet according to a behavior indication of an SRv6 SID of the SRv6 packet.

16. The device according to claim 15, wherein,
the SRv6 SID defines new behavior indication information, where the new behavior indication information indicates a mapping between the SRv6 SID and a non-IP channel.

17. The device according to claim 15, wherein the forwarding module comprises:
a determining sub-module, configured to determine a non-IP channel according to the behavior indication of the SRv6 SID of the SRv6 packet;
a forwarding sub-module, configured to map the SRv6 packet to the non-IP channel for forwarding.

18. The device according to claim 17, wherein the determining sub-module is further configured to extract a channel type and a channel identifier from the SRv6 SID; determine the non-IP channel according to the channel type and the channel identifier.

19. The apparatus according to claim 17, wherein the determining sub-module is further configured to extract a channel identifier from the SRv6 SID; determine the non-IP channel according to the channel identifier.

20. The apparatus according to claim 17, wherein the determining sub-module is further configured to determine the non-IP channel according to a mapping relationship between the SRv6 SID locally stored and the non-IP channel.

21. An apparatus for forwarding a packet, which is located at an initial node, the apparatus comprising:
a generation module, configured to generate an SRv6 packet including an SRv6 SID;
a sending module, configured to send the SRv6 packet, wherein the SRv6 SID is used for indicating a mapping between the SRv6 SID and a non-IP channel.

22. The device according to claim 21, wherein the generating module is further configured to acquire SID list information carrying new SID behavior indication information sent by a controller; generate a SID list containing the new SID behavior indication information; generate the SRv6 packet including the SRv6 SID according to the SID list, wherein the SRv6 SID defines the new SID behavior indication information.

23. A computer readable storage medium, wherein the storage medium stores a computer program, and the computer program is configured to cause, when executed by a processor, the processor to perform the method as claimed in any one of claims 1 to 8 and 9 to 14.

24. An electronic device, comprising a memory and a processor, wherein the memory stores a computer program, and the processor is configured to execute the computer program to perform the method as claimed in any one of claims 1 to 8 and 9 to 14.
